# EUROPEAN PATENT APPLICATION

(11) **EP 4 523 965 A1**
(43) Date of publication of application: **19.03.2025**
(21) Application number: 23803085.2
(22) Date of filing: 10.05.2023
(51) Int. Cl.: B60P 3/34, B60P 3/36

(54) **MULTIPURPOSE RETRACTABLE MODULE FOR VEHICLE ROOFS**

(30) Priority: 11.05.2022 ES 202230790 U; 14.03.2023 ES 202330426 U
(71) Applicant: Construcciones Dalf 2020 Slu, 17600 Figueres (Girona) (ES)
(72) Inventor: LOPEZ FERNANDEZ, Diego Angel, 17600 FIGUERES (GIRONA) (ES)
(74) Representative: Espiell Gomez, Ignacio
(86) International application number: PCT/ES2023/070300
(87) International publication number: WO 2023/218111

(57) **Abstract**

The present invention relates to a multipurpose retractable module for vehicle roofs comprising a support structure (10) configured to be coupled to a vehicle roof through fastening terminals (11), which structure (10) in turn comprises, incorporated therein: a flat base (12) suited for the access of people and/or cargo; and folding structures (13), able to incorporate one or more functional elements that allow the module (1) to be used for different uses, specifically as living space and/or to incorporate cargo (15) and/or to include solar capture elements (20), each folding structure (13) being arranged on one side of the structure (10), and hinged by means of a pivoting shaft (13.1) which is driven by means of a lifting element (14).

## Description

### OBJECT OF THE INVENTION

The invention, as stated in the statement of this descriptive report, refers to a multipurpose retractable module for vehicle roofs, providing, depending on its use, the advantages, and characteristics described in detail below.

The object of this invention lies in a module suitable for inclusion in the roof of a vehicle, normally a camper van, recreational vehicle or similar. It is made up of a set of retractable and folding structures with various configuration options, enabling versatile use of the roof space of the vehicle in different ways. Specifically, as a living space for use when the vehicle is stationary and accessible from the ground via a platform lift or ladder; and/or as a space for transporting cargo, for example bicycles, boards or other items, which can be lifted from the ground to the space without effort, and/or as a space for the inclusion of a drop-down awning of solar panels, which both provides shade and electricity to the vehicle independently.

### FIELD OF APPLICATION OF THE INVENTION

The scope of application of this invention falls within the industry sector dedicated to the manufacture of vehicle accessories, focusing particularly on the field of roof structures, and more specifically those used as a living and cargo area and to couple solar panels.

### BACKGROUND OF THE INVENTION

At present, vehicle roofs are used exclusively as a support surface for different items, for example, for carrying goods, bicycles, etc., not being able to serve as a living space of the vehicle.

Additionally, there are some vehicles that also incorporate a sleeping module on their roof, such as a tent.

Therefore, new structures/modules are required to give additional functionalities to the roofs of vehicles, as living spaces for example.

Moreover, when such supports are used to carry goods, bicycles or other cargo, lifting them onto the roof and subsequent unloading requires considerable effort that would be desirable to avoid.

Finally, the aforementioned supports are also used, sometimes, for the inclusion of solar panels that provide electricity independently. These panels are usually installed permanently, so they can only be used for this function. However, given their configuration in the form of a flat and wide surface, they could be an ideal element to provide shade.

The objective of this invention is, therefore, the development of a module to be installed on the roof of vehicles as a support that makes it possible to solve any of these deficiencies or problems.

Moreover, and referring to the current state of the art, it should be noted that, as far as the applicant knows, there is no other module for vehicle roofs, or any other invention of similar application with technical, structural and constitutive characteristics that are the same as or similar to those claimed here.

### EXPLANATION OF THE INVENTION

The multipurpose retractable module for vehicle roofs proposed by the invention is configured as the ideal solution to the objective indicated above, it being the characterizing details that make it possible and that correctly distinguish it as included in the final claims that accompany this description.

Specifically, what the invention proposes, as noted above, is a module applicable for incorporation onto the roof of a vehicle, usually a camper van, recreational vehicle or similar, that is basically formed from a set of folding and retractable structures with different configuration options that allow one or more uses to utilize the roof space of the vehicle in different ways.

Specifically, in one embodiment variant, the invention's retractable module is configured to serve as a living space when the vehicle is stationary and can be accessed from the ground via a platform lift or ladder

In another embodiment variant, the invention's retractable module is configured to serve as a space for transporting cargo, for example bicycles, boards or other items, which can be lifted from the ground to it without effort. In addition, in this variant, it is not ruled out that the module can also be used as a living space at the same time.

And, in another embodiment variant, the retractable module of this invention is configured to incorporate a drop-down awning of solar panels that provide electricity to the vehicle independently as well as shade. It is also possible to include mechanisms to serve as a living space and/or for transporting cargo.

Therefore, and most specifically, the retractable module for vehicles that is the object of the invention comprises, essentially, a support structure, configured to be coupled to a vehicle roof through fastening terminals, on which a flat base is incorporated with hinged structures, preferably two, one on each side of the flat base, each of which is hinged by a pivoting shaft that is operated by a lifting element, allowing them to be arranged horizontally, included on the flat base, or in a vertical or inclined position, with both of these folding structures being capable of incorporating, one or more additional elements of different kinds fastened to them so that they can move with them to be arranged in different positions.

Thus, in the variant of the module intended as living space, it also includes one or more seating elements coupled to one or both folding structures, where the seating elements can be folded together and unfolded, and are adapted to fulfill a seat function.

In an example of embodiment, the structure also includes a useful element fastened to the flat base, between the seating elements.

In particular, the useful element comprises a folding top surface or tray in different positions through a hinged mechanism and includes a mechanical folding system, at different heights, meaning this surface can be used as a table or as a bed.

In an example of embodiment, at least one of the hinged structures also includes a hole with a detachable stop for the telescopic insertion of a profile inside it.

In some implementation examples , a protective mechanism, inflatable, or of another material and of a certain height, and whose perimeter includes a perimeter closure mechanism that surrounds the entire flat base is also included.

In other examples of embodiment, safety elements are also included, for example, a railing or bar, fastened between the hinged structures.

In some examples of embodiment, a motorized platform lift for access or lowering of users to the retractable module in its variant for use as a living space is also included.

Other examples of embodiment include a ladder, folding, configured to be securely attached to the structure, for example, on its rail (or rails). The lifting elements can be manual or mechanical.

In any case, in a variant of the vehicle roofing module, whether or not it includes the above elements for use as a living space, the support structure with the flat base and the aforementioned hinged structures, also comprises one or two vertical sliding structures which, by means of a useful element of motion transmission, they are lifted up and down on one or both sides of the vehicle by means of an extendable telescopic guide rail mechanism and incorporated into the effect associated with one or the two folding structures; thus allowing the module to be used to carry cargo that can be lifted from the ground to it without effort.

This vertical sliding structure or structures are operated and held by means of the above-mentioned useful element of motion transmission, which may be mechanical or manual, this being what makes it possible to control or lift the structure to the desired place for loading or unloading and its return to where the hinged structure is located.

In addition, each vertical sliding structure has fastened, through another pivoting shaft, a lower platform that pivots on it, being held in a horizontal position by a stop to control and fix its rotation, remaining parallel to the ground, when used to facilitate the addition of cargo.

This lower platform therefore facilitates the support of the provided cargo, preferably anchored by means of fastening elements and clamping to the vertical sliding structure.

Once the cargo has been fastened by the user, the motion transmission element will be activated from the ground to lift the cargo, taking it to the top of the vehicle, where the hinged structure is located, leaving the extendable guide mechanism retracted over the vertical structures, its lower platforms and hinged structures leaving the cargo on the top of the vehicle.

By reactivating the lifting element, the folding structures may be pulled down in order to facilitate loading at the top of the vehicle, leaving the hinged structures parallel to the roof of the vehicle and return to the initial state of system configuration, with the cargo on the structure located on the roof of the vehicle.

Finally, in another embodiment variant, at least one of the hinged structures, also includes, on its external part, one or more solar capture elements.

In an embodiment variant, these solar capture elements are photovoltaic panels built on a folding frame that, as an awning, can be placed in a stowed position, attached on the external part of one or both hinged structures, or in an extended position protruding from the lower side of that structure or hinged structures, hinged structures which, in turn, can be arranged horizontally, parallel on the flat base, or in an inclined position at a certain angle to collect solar radiation with greater perpendicularity.

In an example of embodiment, this frame comprises at least three foldable segments that slide over each other on side guides to move from the stowed position to the extended position.

It should be noted that, in some examples of embodiment, the drop-down racks with the solar capture elements are combined with the incorporation into the hinged structures of any of the other elements described above to use the module also as living space and/or as space for loading.

### DESCRIPTION OF THE DRAWINGS

To complement the description that is being made and in order to provide a better understanding of the characteristics of the invention, this descriptive report is accompanied, as an integral part of it, by plans which represent, but are not limited to, the following:
Figures 1.- It shows a view in the rear elevation of a retractable module mounted on the roof of a vehicle, according to an example of embodiment of this invention, specifically an example of its variant for use as a living space, showing the main parts and elements it comprises;
Figures 2 and 3.- show the example of the module of the invention shown in Figure 1, represented respectively in folded position and in unfolded position;
Figure 4.- shows a perspective view of another example of the retractable module in its living variant, in this case including solar capture elements;
Figure number 5.- shows a perspective view of another example of embodiment of the retractable module in its living variant, in this case including a protective, inflatable element;
Figure 6.- shows a perspective view of another example of the module represented in folded position showing a detail of the available storage space;
Figure number 7.- shows a view in another example of embodiment of the retractable module in its living variant, in this case incorporating a safety railing or bar;
Figure 8.- shows a perspective view of the module of the invention incorporated into the roof of the vehicle that illustrates an example of a platform lift for access or descent of the module;
Figure 9.- shows a perspective view of the module of the invention incorporated into the roof of the vehicle that illustrates an example of a foldable ladder, to access or descend the module;
Figures 10 and 11.- show perspective views of another example of the invention's retractable module, in this case an example of its variant to lift cargo without effort, represented in both Figures in position of use;
Figure 12.- shows a perspective view of the example of the module of the invention shown in Figures 10 and 11, in this case represented in folded position and partially disassembled, showing the various elements and structures that it comprises;
Figure 13 - shows an elevation view of the example of the invention's module shown in Figure 12, in this case represented in an unfolded position for use, but not including the vehicle;
Figure number 14.- Shows a perspective view of another example of embodiment of the retractable module of the invention, specifically an example of its variant for use as an awning with solar capture elements;
Figures number 15 and 16.- They show both elevation and detail views of the example of the module of the invention shown in Figure 14; and
Figures number 17 and 18.- They show perspective views of another example of embodiment of the invention's retractable module, specifically an example that combines the three variants of use as a living space, to lift cargo and with an awning with solar capture elements.

### PREFERRED EMBODIMENT OF THE INVENTION

In light of the aforementioned Figures, and following the adopted numbering, an example can be seen of the non-limiting embodiment of the multipurpose retractable module for vehicle roofs of the invention, including what is described in detail below.

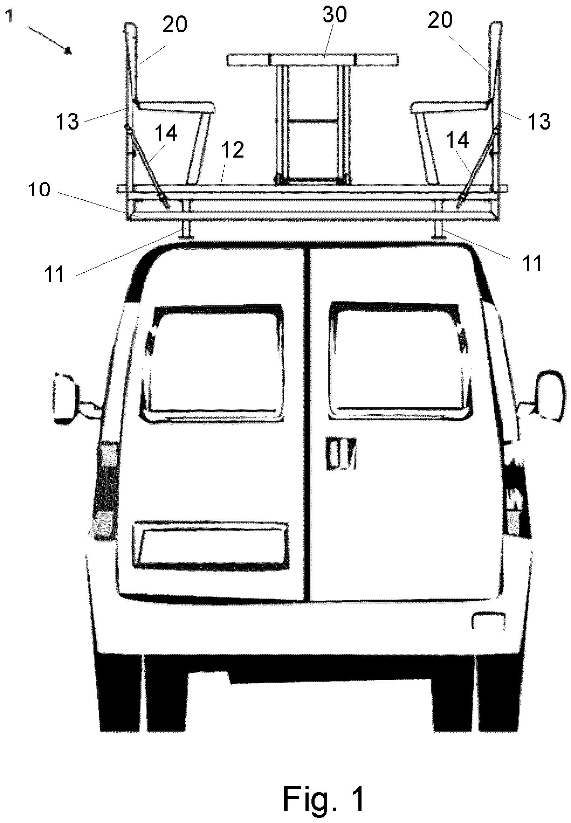

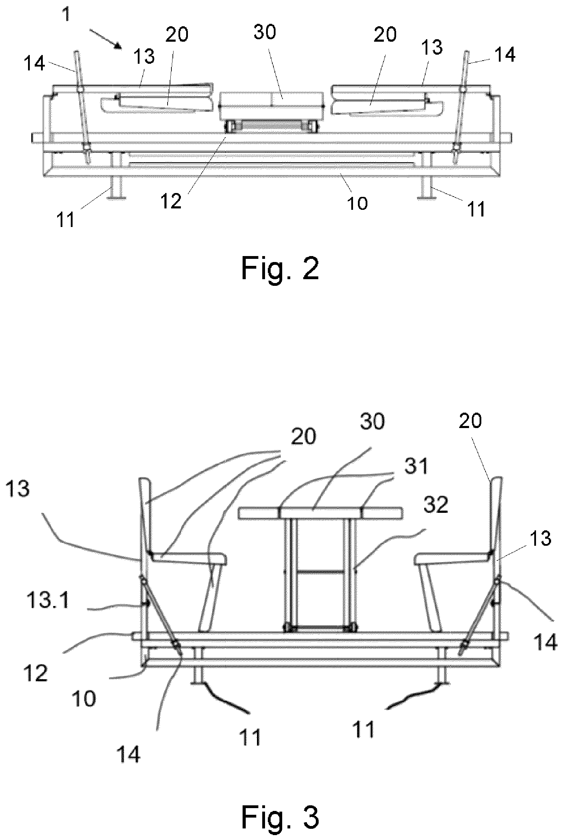

Thus, with reference to the Figs. 1, 2 and 3, they show an example of embodiment of the retractable module (1) for vehicle roofs of the invention, in a living variant. As shown in Fig. 2 the module (1) can be folded and closed, thus facilitating road travel.

The module (1) comprises a support structure (10) that is attached to the roof of the vehicle, in this case a van, through supports or fastening elements (11). The support structure (10) incorporates a base or flat floor (12) for the access of people and/or cargo, and some hinged structures (13), specifically two, each hinged structure (13) being arranged on one side of the support structure (10), and each hinged structure (13) being capable of incorporating one or more functional elements that allow the module (1) to be used for different uses, as appropriate, specifically to use the module as a living space and/or to incorporate cargo (15) and/or to include solar capture elements (20). In any case, each hinged structure (13) is hinged by means of a pivoting shaft (13.1) which in turn is maneuvered by a mechanical or manual lifting element (14), to allow it to be positioned in a folded position (Figure 2) or in an unfolded position (Figures 1 and 3).

Thus, in the variant shown in these Figures 1 to 3, the hinged structures (13) include seat elements (20), folding together. In unfolded position, see Fig. 1 and 3, the elements (20) serve the function of seating. When unfolding the element that is supported by the flat base, (12) it is locked by a pin (not shown) being fastened to the flat base (12).

The module (1) includes a useful element (30), for example, for use as a table or bed, which is fastened to the flat base (12), between the seating elements (20). The useful element (30) includes a folding top surface or tray in various positions by means of a hinged mechanism (31) and includes a mechanical folding system (32), at different heights, depending on the user's needs.

It should be noted that the folding/unfolding of the useful element (30) and of the seating elements (20) is independent, with the seating elements (20) folded and the useful element (30) unfolded, or vice versa.

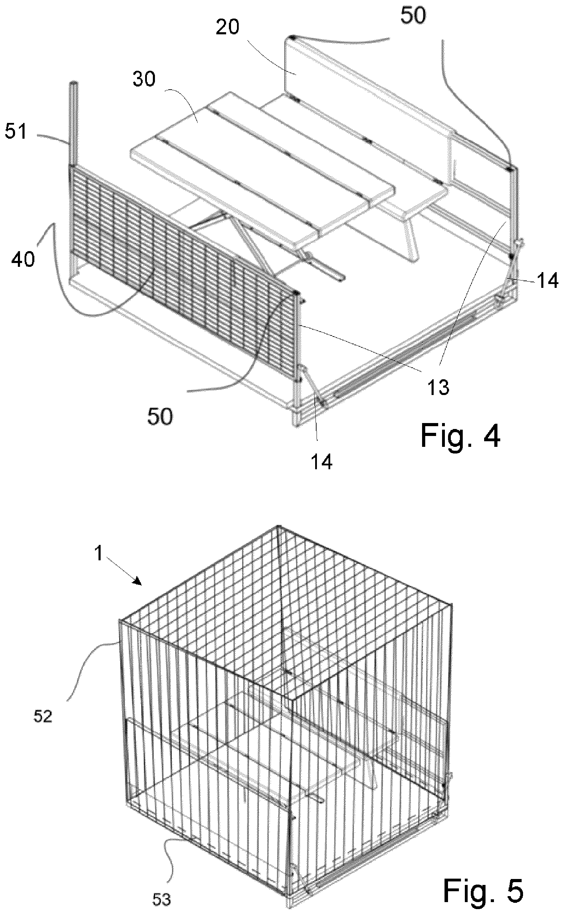

In Fig. 4 another example of the proposed module (1) is shown in which hinged structures (13) include a solar capture element (40).

In addition, Figure 4 shows how the vertical profiles of these hinged structures (13) also include a hole with a detachable stop (50) for the telescopic insertion of a profile (51) inside. In particular, in one example of embodiment, the function of these profiles is to allow the attachment of a protective element (52), inflatable, in which its lower perimeter comprises a perimeter closure system (53) fastened to the perimeter of the flat base (12), as shown in the example in Fig. 5. In other examples of embodiment, not shown, the function of these profiles is simply to make a skeleton structure for a canvas, or similar element.

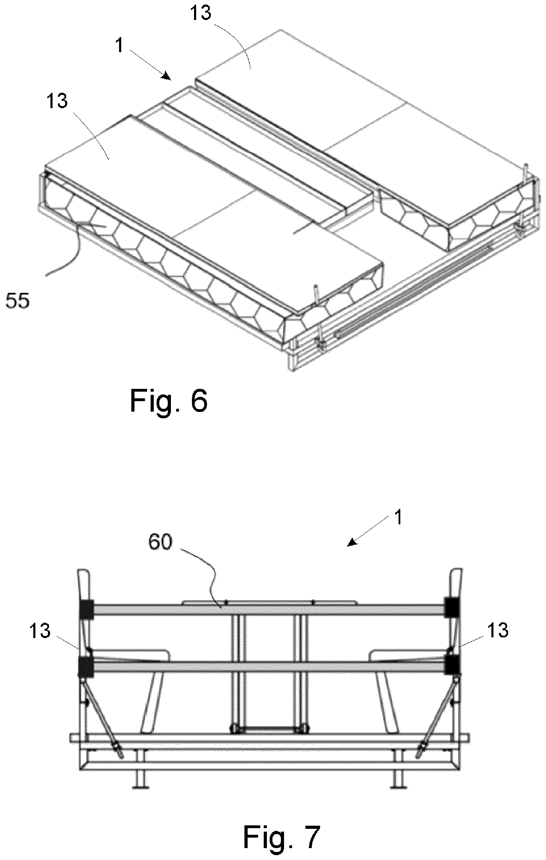

In Fig. 6, the storage spaces (55) available under the hinged structures (13) and fastened to the flat base (12) can be observed.

In Fig. 7 shows another example of embodiment of the proposed module (1). In this case, between the hinged structures (13) a safety element (60) is incorporated, extendable, specifically a railing or bar.

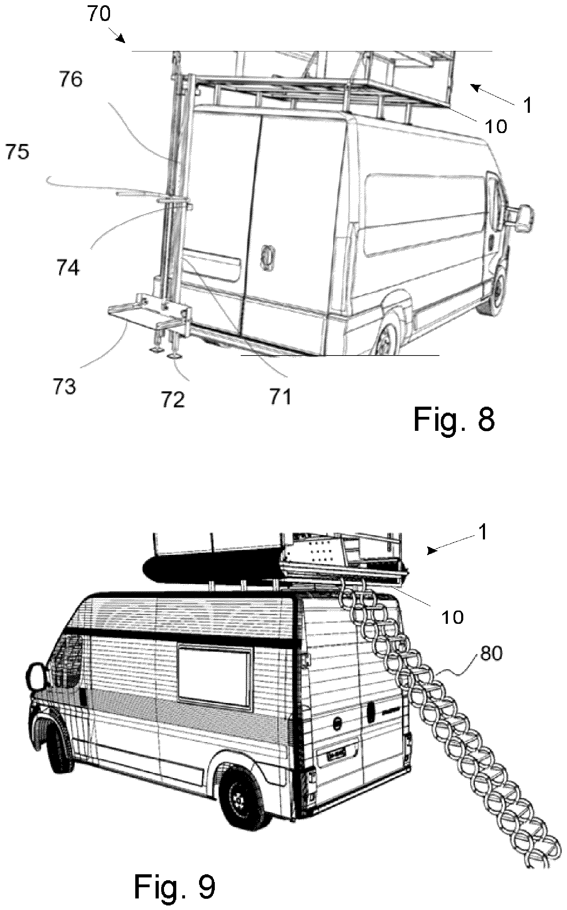

In order to easily and safely access the proposed module (1), in some examples of embodiment, it also provides a motorized lifting platform (70), installed for example on the rear of the vehicle, on one of the rear doors of the vehicle, or on the side. In Fig. 8 shows a specific example of the lifting platform (70). This includes guides (71) that are fastened to the door of the vehicle, or to the side, by an anchoring mechanism (74). The lifting platform (70) also comprises a folding stand (73) that can be moved up and down along the guides (71) and a worm shaft (76). According to this particular embodiment example, a folding clamping mechanism (75) is also included to allow secure user access to the module (1), and ground support legs (72).

In Fig. 9 shows another mechanism for accessing the module (1). In this case, the mechanism comprises a ladder (80), folding, to be attached or fastened to the module (1), specifically in a profile of the bearing structure (10). The above-mentioned ladder (80) can move along the above profile to one side or another and thus not prevent the opening of the rear doors of the vehicle.

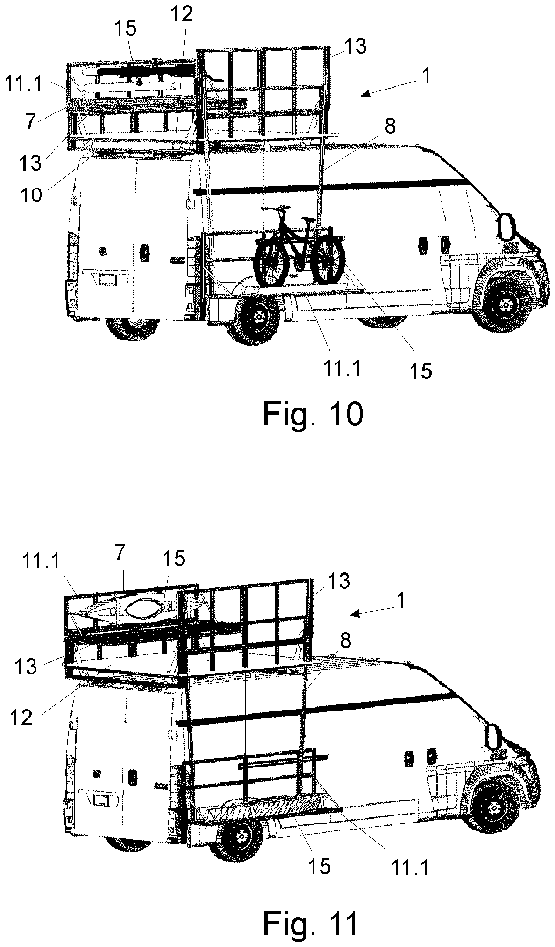

In Figures 10, 11, 12 and 13, it can be observed that, in another embodiment variant, alternatively or in addition to the inclusion of the mentioned elements, the module (1) comprises, one or two vertical sliding structures (7) that, by means of a useful motion transmission element (10.1) which can be mechanical or manual, move up and down on one or both sides of the vehicle by means of a telescopically extendable guide mechanism (8) that is connected to the outer side of one or both of the hinged structures (13) to lift cargo (15) from the ground to the structure (10) located on the roof of the vehicle.

In addition, preferably, this vertical sliding structure(7) has fastened, hinged by a second pivoting shaft (12.1), a lower platform (11.1) to incorporate cargo (15), being held in a horizontal position by a stop system (13.2) that limits and determines its rotation, remaining parallel to the ground.

**In** one embodiment, the vertical sliding structure(s) (7) comprises attachment and clamping elements (14.1) to hold cargo (15) in order to prevent unwanted movements of cargo during its lifting from the ground to the hinged structure (13).

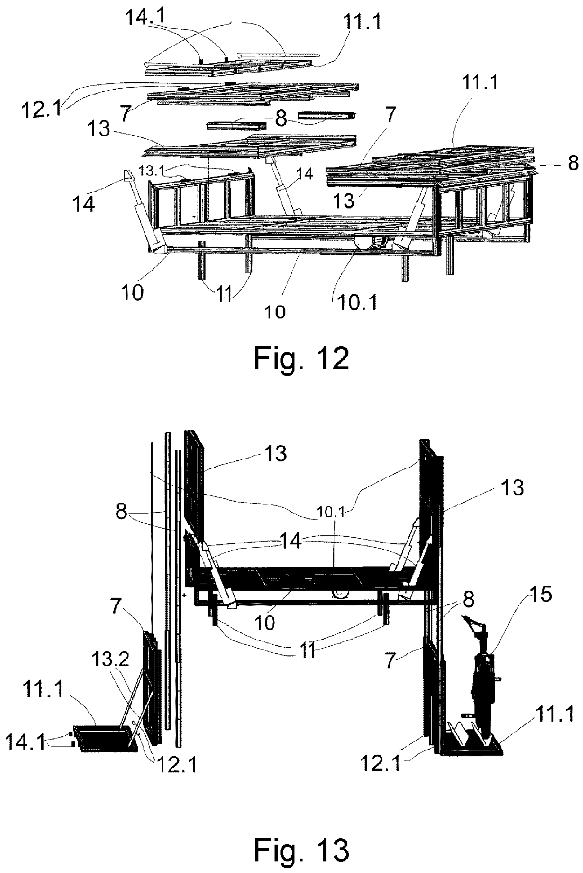

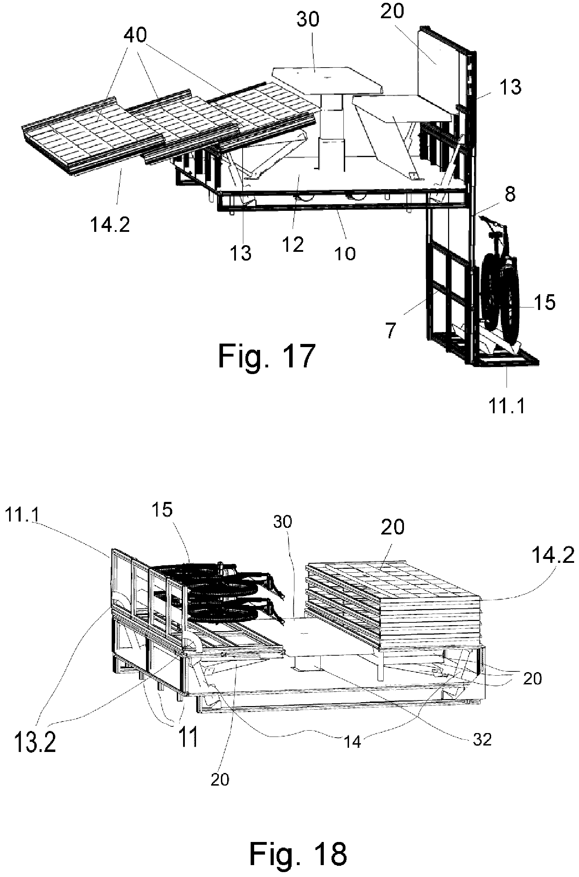

Figures 10, 11 and 13 show the layout of this vertical sliding structure assembly (7) and its lower platform (11.1) with the incorporated cargo (15) placed in the position of use on a telescopically extendable guide mechanism (8), while Figure 12 and Figure 18 show a telescopically extendable guide mechanism (8) retracted on vertical sliding structures (7), their lower platforms (11,1) and these, in turn, on the hinged structures (13), with the cargo being (15) at the top of the vehicle (Figure 18).

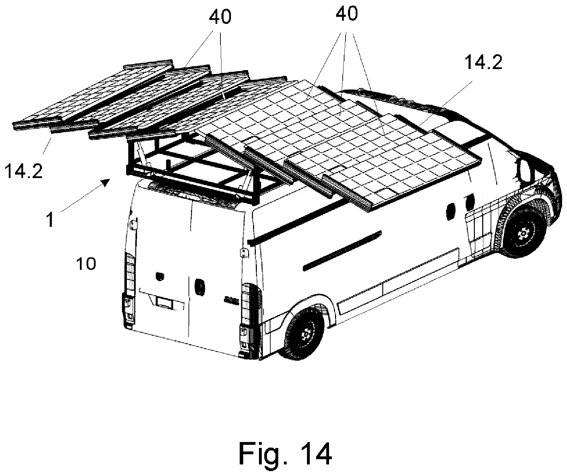

In addition, in Figure 14, it can be observed how, in one embodiment, the hinged structures (13) include solar capture elements (40) are formed by photovoltaic solar panels incorporated on an extendable or folding frame (14.2) that, in a retracted position is situated parallel over these hinged structures (13) and how, in an extended position, it stands out from it to serve as an awning on one or both sides of the vehicle. Preferably, the solar capture elements (40) are located with an inclination of 30° to the horizontal.

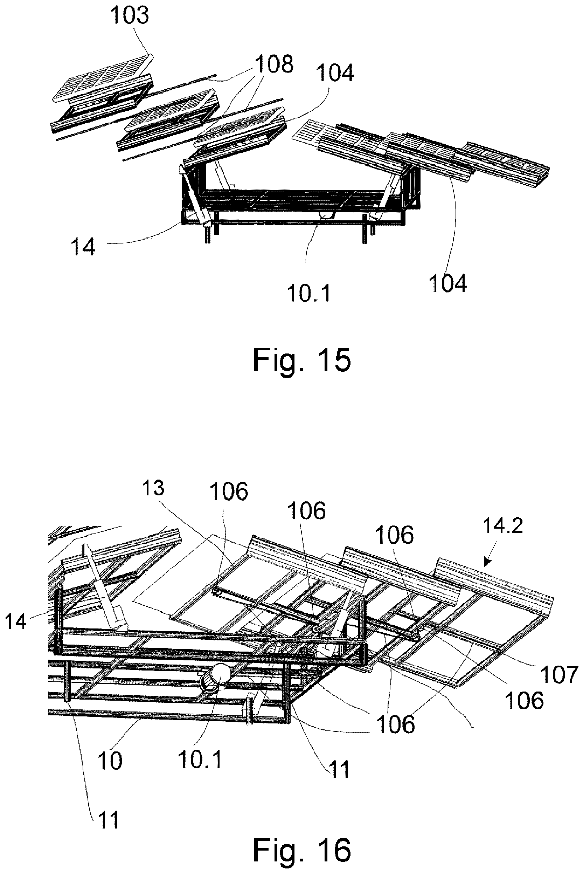

In Figures 15 and 16, it can be observed how, in one embodiment, this folding frame (14.2) comprises at least three folding structural segments that slide together by means of respective pairs of lateral profiles (108) that provided in the lower side of each segment run, as guides, fitted into rails (104) provided on both sides of them, allowing them to be taken from a retracted position, as shown in Figure 18, to an unfolded position, as shown in Figures 14 to 17.

Finally, in Figures 17 and 18, it can be observed that any of the options and variants described can be combined in the same embodiment of the module (1) of the invention and, for example, include seating elements (20), a useful element (30) with a surface suitable for use as a table or bed, together with a vertical sliding structure (7) with bottom platform (11.1) coupled on a telescopic extendable guide (8) for effortlessly lifting and lowering cargo (15), as well as solar capture elements (40) incorporated in an extendable frame (14.2) that serves as an awning.

Preferably, the solar capture elements (40) are located with an inclination of 30° to the horizontal.

In any case, the module (1) is lightweight, robust and easy to fold/unfold. It can be made of various materials, such as aluminum, plastic, steel, wood, or combinations or alloys of these.

Having sufficiently described the characteristics of the present invention, as well as the method of putting it into practice, it is not considered necessary to set forth a more extensive explanation in order for any expert in the field to understand its scope and its advantages.

## Claims

1. The multipurpose retractable module for vehicle roofs that, comprising a support structure (10) configured to be attached to the roof of a vehicle through fastening terminals (11), is **characterized in that** the structure (10) comprises:
- a flat base (12) suitable for people access and/or cargo; and
- folding structures (13), capable of incorporating one or more functional elements that allow the module (1) to be used in different ways, each of the folding structures (13) being arranged on one side of the structure (10), and where each hinged structure (13) is hinged by means of a pivoting shaft (13.1) which is driven by means of a lifting element (14).

2. The multipurpose retractable module for vehicle roofs, according to claim 1, is **characterized in that** one or both hinged structures (13) include some seating elements (20) that can be folded and unfolded and are suitable to be used as a seat.

3. The multipurpose retractable module for vehicle roofs, according to claim 1 or 2, is **characterized in that** it comprises, in addition, a useful element (30) fastened to the flat base (12).

4. The multipurpose retractable module for vehicle roofs, according to claim 3, is **characterized in that** the useful element (30) comprises a surface or top tray folding in various positions by means of a hinged mechanism (31) and includes a mechanical folding system (32), at different heights.

5. The multipurpose retractable module for vehicle roofs, according to any of claims 1 to 4, is **characterized in that** the lifting elements (14) are manual or mechanical.

6. The multipurpose retractable module for vehicle roofs, according to any of claims 1 to 5, is **characterized in that** at least one of the hinged structures (13) also includes a hole with a detachable stop (50) for the telescopic insertion of a profile (51) inside.

7. The multipurpose retractable module for vehicle roofs, according to claim 6, is **characterized in that** it also comprises a protective element (52), inflatable, of a certain height and whose perimeter includes a perimeter closure mechanism (53) that surrounds the entire flat base (12).

8. The multipurpose retractable module for vehicle roofs, according to any of the above claims, is **characterized in that** it also includes safety elements (60) attached to the hinged structures (13).

9. The multipurpose retractable module for vehicle roofs, according to any of the previous claims, is **characterized in that** it also includes a motorized lifting platform (70).

10. The multipurpose retractable module for vehicle roofs, according to any of claims 1 to 8, is **characterized in that** it comprises a folding ladder (80), configured to fasten or engage in the structure (10).

11. The multipurpose retractable module for vehicle roofs, according to any of the above claims, is **characterized in that** it also comprises one or two vertical sliding structures (7) associated with a useful element of movement transmission (10.1) mechanical or manual, by means of which they move up and down on a telescopically extendable guide mechanism (8) that is connected to the outer face of one or two hinged structures (13) to lift cargo (15) from the ground to the structure (10) located on the roof of the vehicle.

12. The multipurpose retractable module for vehicle roofs, according to claim 11, is **characterized in that** said vertical sliding structure (7) has fastened, hinged by a second pivoting shaft (12.1), a lower platform (11.1) to incorporate cargo (15).

13. The multipurpose retractable module for vehicle roofs, according to claim 11 or 12, is **characterized in that** the vertical sliding structure (7) comprises fastening and clamping elements (14.1) to fasten cargo (15).

14. The multipurpose retractable module for vehicle roofs, according to any of claims 1 to 13, is **characterized in that** one or both hinged structures (13) include solar capture elements (40).

15. The multipurpose retractable module for vehicle roofs, according to claim 14, is **characterized in that** the solar capture elements (40) are incorporated on an extendable or folding frame (14.2) which, in its retracted position is located parallel on one or both hinged structures (13) and, in an extended position it stands out from it, serving as an awning, with, preferably, the solar capture elements (40) located with an inclination of 30° to the horizontal.

16. The multipurpose retractable module for vehicle roofs, according to claim 15, is **characterized in that** the drop-down frame (14.2) comprises, at least, three structural segments that slide together along lateral profiles (108) that run embedded in side rails (104).
